# EUROPEAN PATENT SPECIFICATION

(11) **EP 4 455 958 B1**
(45) Date of publication and mention of the grant of the patent: **06.05.2026**
(21) Application number: 23203657.4
(22) Date of filing: 13.10.2023
(51) Int. Cl.: G06Q 10/063

(54) **AUTOMATIC INSIGHT INTO TICKET SUPPORT PROCESSES VIA XAI EXPLANATION OF PREDICTION MODELS**
AUTOMATISCHE EINSICHT AUF TICKETUNTERSTÜTZUNGSPROZESSE ÜBER XAI-ERKLÄRUNG VON VORHERSAGEMODELLEN
APERÇU AUTOMATIQUE DE PROCESSUS DE SUPPORT DE TICKET PAR L'EXPLICATION XAI DE MODÈLES DE PRÉDICTION

(30) Priority: 28.04.2023 US 202318141232
(43) Date of publication of application: 30.10.2024
(73) Proprietor: Red Hat, LLC, Raleigh, NC 27601 (US)
(72) Inventor: GEADA, Robert, Raleigh (US); CAUGHEY, Nicholas, Raleigh (US)
(74) Representative: Murgitroyd & Company

(56) References cited:
- EP-A1- 4 149 075
- US-A1- 2017 353 991
- US-A1- 2022 058 347
- US-A1- 2022 405 623
- US-A1- 2023 129 123

## Description

### TECHNICAL FIELD

Aspects of the present disclosure relate to artificial intelligence (AI)-enhanced support ticket analysis, and more specifically to use of an explainable artificial intelligence (XAI) model to explain how and why an AI model that predicts support ticket resolution statistics arrives at its predictions.

### BACKGROUND

Customer support within the IT industry often operates on a ticketing system, where customers create support tickets describing their particular issue with the software/service being offered by a company. Examples of issues can include malfunctions/bugs as well as security vulnerabilities. These support tickets are then triaged by the company (which may hold e.g., a service level agreement (SLA) with the client), which assigns tickets to the company's customer support agents according to the problem domain, complexity, and priority. Once the ticket's issue is resolved, the ticket is marked closed, and statistics about the ticket's resolution are collected. These statistics include the time required to resolve the support ticket, the number of reassignments (e.g., how often the ticket needed to be moved to a different support agent or department) required to resolve the support ticket, the relative difficulty/personnel cost of resolving the support ticket, and whether the terms of the SLA were breached.

Document D1 2023/129123 A1 discloses automatically providing issue prediction for trouble ticket, involving utilizing a categorized set of symptoms and identified sets or IT assets and utilizing predicted case classification to resolve trouble ticket. US 2022/058347 A1 relates to a chabot system configured to execute code to perform determining a classification result for an utterance.

### SUMMARY

According to an aspect of the present disclosure there is provided a method as disclosed by claim 1

The AI model may be trained to predict values for each of the one or more desired statistical parameters based on data in a support ticket, and it may be trained using a database of previously resolved support tickets and corresponding resolution statistics. Each explanation in the set of explanations may comprise a plurality of different words that the support ticket is comprised of, and for each of the plurality of different words, an associated cost regarding a desired statistical parameter of the one or more desired statistical parameters. In this case, aggregating the set of explanations may comprise, for each word among the set of explanations, averaging the associated cost regarding the desired statistical parameter across each explanation where the word occurs. The set of statistical parameters may comprise an amount of time required to resolve a support ticket, a number of reassignments required to resolve the support ticket, a personnel cost required to resolve the support ticket, and an indication of whether any terms of a service level agreement (SLA) were breached. Generating the set of explanations for the set of predicted resolution statistics of a support ticket may comprise generating a set of synthetic support tickets, each of the set of synthetic support tickets comprising a permutation of the support ticket, querying the AI model with each of the set of synthetic support tickets, and generating the set of explanations for the set of predicted resolution statistics of the support ticket based predicted resolution statistics generated by the AI model for each of the set of synthetic support tickets and the set of predicted resolution statistics.

According to a further aspect of the present disclosure, there is provided a system comprising:
a memory; and
a processing device operatively coupled to the memory, the processing device to:
   receive an indication of one or more desired statistical parameters to be optimized, the one or more desired statistical parameters being part of a set of statistical parameters relating to performance of a support stack;
   train an AI model to predict values for each of the one or more desired statistical parameters based on data in a support ticket;
   for each of a plurality of support tickets input to the support stack:
      analyze the support ticket using the artificial intelligence (AI) model to generate a set of predicted resolution statistics including predicted values for each of the one or more desired statistical parameters, and
      analyze the set of predicted resolution statistics using an explainable artificial intelligence (XAI) algorithm to generate a set of explanations for the set of predicted resolution statistics; and
      aggregate the set of explanations for each of the plurality of support tickets to generate one or more insights regarding the one or more desired statistical parameters.

The AI model may comprise a neural network, and it may be trained using a database of previously resolved support tickets and corresponding resolution statistics. Each explanation in the set of explanations may comprise a plurality of different words that the support ticket is comprised of, and for each of the plurality of different words, an associated cost regarding a desired statistical parameter of the one or more desired statistical parameters. In that case, to aggregate the set of explanations, the processing device may, for each word among the set of explanations, average the associated cost regarding the desired statistical parameter across each explanation where the word occurs. The set of statistical parameters may comprise an amount of time required to resolve a support ticket, a number of reassignments required to resolve the support ticket, a personnel cost required to resolve the support ticket, and an indication of whether any terms of a service level agreement (SLA) were breached. To generate the set of explanations for the set of predicted resolution statistics of a support ticket, the processing device may generate a set of synthetic support tickets, each of the set of synthetic support tickets comprising a permutation of the support ticket, query the AI model with each of the set of synthetic support tickets, and generate the set of explanations for the set of predicted resolution statistics of the support ticket based predicted resolution statistics generated by the AI model for each of the set of synthetic support tickets and the set of predicted resolution statistics.

According to a still further aspect of the present disclosure there is provided a non-transitory computer-readable medium having instructions stored thereon which, when executed by a processing device cause the processing device to:
receive an indication of one or more desired statistical parameters to be optimized, the one or more desired statistical parameters being part of a set of statistical parameters relating to performance of a support stack;
for each of a plurality of support tickets input to the support stack:
   analyze the support ticket using an artificial intelligence (AI) model to generate a set of predicted resolution statistics including predicted values for each of the one or more desired statistical parameters; and
   analyze the set of predicted resolution statistics using an explainable artificial intelligence (XAI) algorithm to generate a set of explanations for the set of predicted resolution statistics; and
   aggregate the set of explanations for each of the plurality of support tickets to generate one or more insights regarding the one or more desired statistical parameters.

The processing device may train the AI model to predict values for each of the one or more desired statistical parameters based on data in a support ticket, and the AI model may be trained using a database of previously resolved support tickets and corresponding resolution statistics. Each explanation in the set of explanations may comprise a plurality of different words that the support ticket is comprised of, and for each of the plurality of different words, an associated cost regarding a desired statistical parameter of the one or more desired statistical parameters. In that case, aggregating the set of explanations may comprise, for each word among the set of explanations, averaging the associated cost regarding the desired statistical parameter across each explanation where the word occurs. The set of statistical parameters may comprise an amount of time required to resolve a support ticket, a number of reassignments required to resolve the support ticket, a personnel cost required to resolve the support ticket, and an indication of whether any terms of a service level agreement (SLA) were breached. Generating the set of explanations for the set of predicted resolution statistics of a support ticket may comprise generating a set of synthetic support tickets, each of the set of synthetic support tickets comprising a permutation of the support ticket, querying the AI model with each of the set of synthetic support tickets, and generating the set of explanations for the set of predicted resolution statistics of the support ticket based predicted resolution statistics generated by the AI model for each of the set of synthetic support tickets and the set of predicted resolution statistics.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system, in accordance with some embodiments of the present disclosure.
FIG. 2 is a block diagram that illustrates a detailed example system for generating insights to optimize a support stack, in accordance with some embodiments of the present disclosure.
FIG. 3 illustrates example explanations generated by an XAI algorithm, in accordance with some embodiments of the present disclosure.
FIG. 4 is a block diagram that illustrates a detailed example system for generating insights to optimize a support stack, in accordance with some embodiments of the present disclosure.
FIG. 5A illustrates explanations generated by the XAI algorithm in the example system of FIG. 4, in accordance with some embodiments of the present disclosure.
FIG. 5B illustrates insights generated by the aggregator of FIG. 4 based on the explanations in FIG. 5A, in accordance with some embodiments of the present disclosure.
FIG. 6 is a flow diagram of a method for generating insights to optimize a support stack, in accordance with some embodiments of the present disclosure.
FIG. 7 is a block diagram of an example computing device that may perform one or more of the operations described herein, in accordance with some embodiments of the present disclosure.

### DETAILED DESCRIPTION

Accurately predicting resolution statistics at support ticket creation time can help the supporting company triage the ticket and allocate its resource appropriately. One common way of estimating any of these statistics is via natural language processing (NLP), wherein artificial intelligence (AI) models analyze the inbound ticket's content and try to predict the desired statistic. Ticketing systems usually store a vast number of previously-resolved support tickets as a resource for support agents to reference when supporting new tickets. These previously-resolved support tickets can serve as an excellent source of training data for the AI model.

While such prediction models are a useful triaging tool, understanding why certain support tickets are highly complex or difficult to resolve can also be a useful diagnostic tool for the company's support stack, since fixing identified problems can save significant amounts of time and money. If the prediction model is accurate, it can be taken as a proxy for the real, underlying process that determines ticket complexity. However, such prediction models operate as black box models whose inner workings are either inaccessible or so complex as to be conventionally uninterpretable. Common examples of such black-box models are neural networks and random forests. Explainable artificial intelligence (XAI) algorithms seek to find quick and intuitive explanations of such complex models. With respect to a support ticket prediction system, an explainable artificial intelligence (XAI) algorithm can be used to explain how and why the prediction model arrives at predicted statistics for inbound support tickets.

Embodiments of the present disclosure provide an XAI explanation aggregation model that aggregates explanations of a predictive AI models' predictions regarding support ticket resolution statistics to diagnose and improve the performance of a support stack. The aggregated explanations may be used to generate insights into the performance of the support stack. A processing device may receive an indication of one or more desired statistical parameters to be optimized, the one or more desired statistical parameters being part of a set of statistical parameters relating to performance of a support stack. A prediction model may be trained to predict resolution statistics including values for the one or more desired statistical parameters. For each of a plurality of support tickets input to the support stack, the support ticket may be analyzed using the prediction model to generate a set of predicted resolution statistics including predicted values for each of the one or more desired statistical parameters and the set of predicted resolution statistics may be analyzed using an XAI algorithm to generate a set of explanations for the predicted resolution statistics. The set of explanations for each of the plurality of support tickets may be aggregated to generate one or more insights regarding the one or more desired statistical parameters.

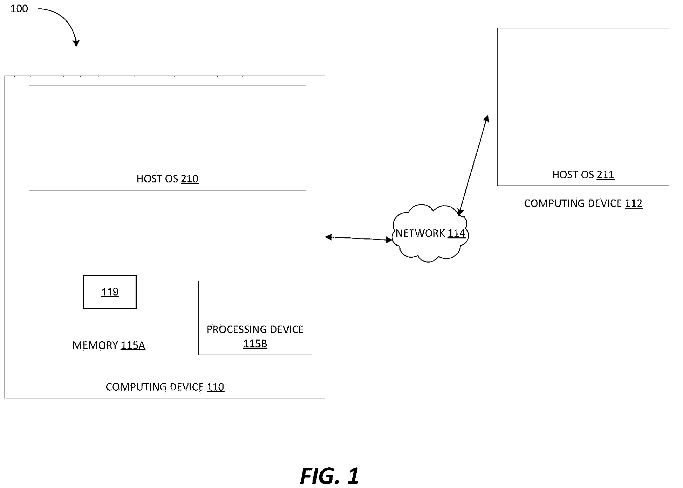

FIG. 1 is a block diagram that illustrates an example system 100. As illustrated in FIG. 1, the system 100 includes a computing device 110, and a plurality of computing device 112. The computing devices 110 and 112 may be coupled to each other (e.g., may be operatively coupled, communicatively coupled, may communicate data/messages with each other) via network 114. Network 114 may be a public network (e.g., the internet), a private network (e.g., a local area network (LAN) or wide area network (WAN)), or a combination thereof. In one embodiment, network 114 may include a wired or a wireless infrastructure, which may be provided by one or more wireless communications systems, such as a WiFi^{™} hotspot connected with the network 114 and/or a wireless carrier system that can be implemented using various data processing equipment, communication towers (e.g. cell towers), etc. In some embodiments, the network 114 may be an L3 network. The network 114 may carry communications (e.g., data, message, packets, frames, etc.) between computing device 110 and computing device 112. Each computing device 110 and 112 may include hardware such as processing device 115B (e.g., processors, central processing units (CPUs)), memory 115A (e.g., random access memory 115A (e.g., RAM)), storage devices (e.g., hard-disk drive (HDD), solid-state drive (SSD), etc. - not shown), and other hardware devices (e.g., sound card, video card, etc. - not shown). In some embodiments, memory 115A may be a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. Memory 115A may be configured for long-term storage of data and may retain data between power on/off cycles of the computing device 110. Each computing device may comprise any suitable type of computing device or machine that has a programmable processor including, for example, server computers, desktop computers, laptop computers, tablet computers, smartphones, set-top boxes, etc. In some examples, each of the computing devices 110 and 112 may comprise a single machine or may include multiple interconnected machines (e.g., multiple servers configured in a cluster). The computing devices 110 and 112 may be implemented by a common entity/organization or may be implemented by different entities/organizations. For example, computing device 110 may be operated by a first company/corporation and one or more computing device 112 may be operated by a second company/corporation. Each of computing device 110 and computing device 112 may execute or include an operating system (OS) such as host OS 210 and host OS 211 respectively, as discussed in more detail below. The host OS of a computing device 110 and 112 may manage the execution of other components (e.g., software, applications, etc.) and/or may manage access to the hardware (e.g., processors, memory, storage devices etc.) of the computing device. In some embodiments, each of computing device 110 and computing device 112 may constitute a deployment of a cloud data platform or data exchange.

The system 100 may represent any system in which a ticket-based support system described hereinabove may be implemented. For example, the system 100 may be a system for developing, testing, and delivering applications in containers and may implement a container orchestration platform such as the Red Hat OpenShift^{™} platform. One example is the use of such platforms to automate and push software as containers to small-scale edge and Internet-of-Things (IoT) gateway devices in a domain (a domain may include of a group of devices that share the same configuration, policies, and identity stores). In other examples, the system 100 may represent a system for streaming content (e.g., computing device 110 may stream audio and/or video content to a customer using computing device 112), an enterprise database system, or any other appropriate system where a ticket-based support system described hereinabove may be implemented.

As shown in FIG. 1, the memory 115A may include a support ticket insight generation module 119 (hereinafter referred to as insight generation module 119), which may comprise software or logic to perform the functions described herein. The insight generation module 119 may be executed by the processing device 115 to perform some or all of the functions described herein.

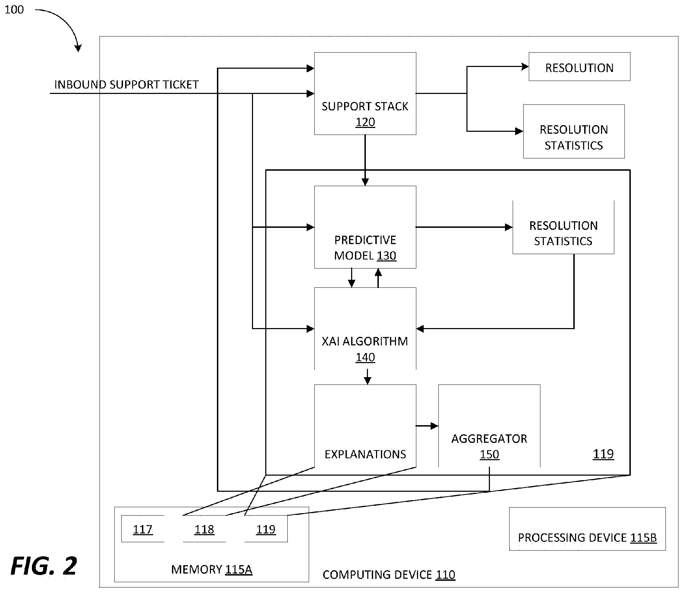

FIG. 2 illustrates the insight generation module 119 in accordance with some embodiments of the present disclosure. The insight generation module 119 may comprise a prediction model 130, an XAI algorithm 140, and an aggregator 150. FIG. 2 also illustrates a support stack 120, which may represent the functionality for resolving a support ticket (e.g., support agents/customer support team of the company and support ticket assignment logic) as well as logic to collect resolution statistics. The input to the support stack 120 may be a support ticket and the output of the support stack 120 may comprise the resolution of the support ticket as well as resolution statistics for the support ticket. The resolution statistics may include values for various statistical parameters relating to performance of the support stack 120 including e.g., the amount of time required to resolve the support ticket, the number of reassignments required to resolve the support ticket (e.g., how often the ticket needed to be moved to a different support agent or department), the relative difficulty/personnel cost required to resolve the support ticket, and whether the terms of an SLA were breached among others.

The prediction model 130 may be an AI model trained to predict resolution statistics of a support ticket that is input to the support stack 120 (i.e., predict the resolution statistics that would be output by the support stack 120 after resolution of the support ticket). The prediction model 130 may comprise any appropriate AI model such as a neural network. The prediction model 130 may be trained using a previously-resolved tickets database 117 (i.e., a database of previously-resolved tickets) which may comprise a large number of previously-resolved tickets and their corresponding resolution statistics. However, the prediction model 130 may not necessarily be trained to predict values for each of the statistical parameters described hereinabove. Indeed, in accordance with embodiments of the present disclosure, the customer support team may wish to gain insights regarding specific statistical parameters to optimize the functionality of the support stack 120. For example, the customer support team may wish to determine ways to improve the time required for resolution of support tickets and may want to understand what factors cause the time required to resolve support tickets to increase. Thus, the customer support team may select certain desired statistical parameters that the prediction model 130 should output predicted values for and the prediction model 130 may be trained to predict values for the selected statistical parameters (e.g., time required for resolution) given an input support ticket. The customer support team may select any number/combination of statistical parameters for the prediction model 130 to output predicted values for. In some embodiments, the insight generation module 119 may provide a user interface (not shown) via which a member of the customer support team may select desired statistical parameters from a set of available statistical parameters. In this way, the prediction model 130 may be trained and retrained on the fly as the customer support team wishes to gain insights as to various different statistical parameters.

The prediction model 130 may predict resolution statistics using any appropriate method(s) or combination thereof. One common method of predicting resolution statistics is via natural language processing (NLP), wherein the prediction model 130 may analyze the inbound support ticket's text content and try to predict values for each of the desired statistical parameters. A support ticket may comprise various fields having text in them, and the text from each field may be combined into one body of text and analyzed by the prediction model 130. For example, a first field of a support ticket may describe an issue (e.g., malfunction/bug, security vulnerability) with a particular product or service, while a second field of the support ticket may describe a platform the product is being used on (e.g., Mac, PC) as well as details on the hardware specifications of the platform (e.g., memory, processor speed, internet connection speed, etc.). Other fields of the support ticket may describe the geographical region in which the product or service is being used, whether the customer is an individual or an organization, and whether the customer has submitted support tickets previously, among other information.

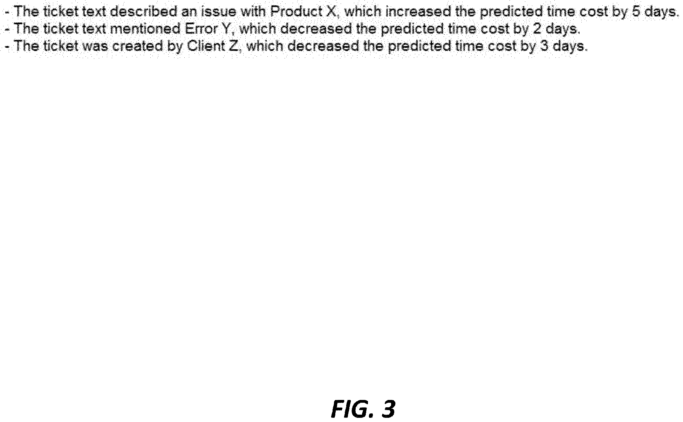

The XAI algorithm 140 may be an AI model trained to analyze a support ticket and corresponding resolution statistics output by the prediction model 130 and provide an explanation(s) of how and why the prediction model 130 arrived at its predicted resolution statistics. The XAI algorithm 140 may implement saliency techniques such as LIME or SHAP that generate a quantitative breakdown of how components within an input to the prediction model 130 (i.e., the support ticket) affect the output of the prediction model 130 (the resolution statistics). FIG. 3 illustrates example explanations provided by a typical saliency technique after analyzing resolution statistics generated by the prediction model 130. More specifically, FIG. 3 illustrates example explanations of predictions made by the prediction model 130 regarding the time required for resolution of an inbound support ticket (an example desired statistical parameter). FIG. 3 illustrates the example explanations in a phrase-cost format. For example, a first explanation states that "the ticket described an issue with product X" (phrase), "which increased the predicted time cost by 5 days" (cost regarding a desired statistical parameter). This indicates that the XAI algorithm 140 is configured to determine the impact of each phrase/sentence on the desired statistical parameter(s). However, the phrase cost format is not a limitation and the XAI algorithm 140 can be tuned to provide explanations in any appropriate format. For example, if the customer support team wishes to understand the impact that particular words in the inbound support ticket have on the desired statistical parameter, then the XAI algorithm 140 may be configured to output explanations in a word-cost format (e.g., "laptop, increased the predicted time cost by 5 days"). In this case, the explanations output by the XAI algorithm 140 may comprise the plurality of different words that the support ticket is comprised of and for each word of the plurality of different words, an associated cost regarding the desired statistical parameter.

The XAI algorithm 140 may communicate with the prediction model 130 to generate its explanation(s) of how and why the prediction model 130 arrived at its predicted resolution statistics. More specifically, the XAI algorithm 140 may analyze the inbound support ticket and create synthetic support tickets, each of which are permutations of the original inbound support ticket. The XAI algorithm 140 may query the prediction model 130 with each synthetic support ticket and receive the resolution statistics predicted by the prediction model 130 for that synthetic support ticket. Based on the predicted resolution statistics of each synthetic support ticket (as well as the resolution statistics of the inbound support ticket), the XAI algorithm 140 may generate explanations of how and why the prediction model 130 arrived at its predicted resolution statistics for the inbound support ticket.

The XAI algorithm 140 may utilize any appropriate technique to generate its explanations using the above framework. For example, the XAI algorithm 140 may utilize a perturbation-based technique wherein it may perturb the prediction model 130 (using synthetic support tickets as described hereinabove), measure the reaction of the prediction model 130 (i.e., the resolution statistics generated by the prediction model 130 in response to each synthetic support ticket), and generate explanations based on the resolution statistics generated by the prediction model 130 for each synthetic support ticket that it perturbs the prediction model 130 with. In another example, the XAI algorithm 140 may use a function-based technique wherein it treats the predictive model 130 as a function, obtains resolution statistics generated by the prediction model 130 for each synthetic support ticket, and generates explanations based on the resolution statistics generated by the prediction model 130 for each synthetic support ticket.

The explanation(s) generated by the XAI algorithm 140 for the inbound support ticket may be stored in a support ticket explanation database 118 within memory 115A. Over time, as the explanations provided by the XAI algorithm 140 for the predicted resolution statistics of various subsequent inbound support tickets are collected, the aggregator 150 may aggregate the explanations for each of the subsequent inbound support ticket stored in the database 118 in view of the desired statistical parameters. The total sum of the explanations generated by the XAI model 140 for each of the inbound support tickets stored in the database 118 may provide comprehensive insights into the statistical parameters being predicted by the prediction model 130. For example, after aggregation, the aggregator 150 may determine that whenever an inbound support ticket mentions product X in usage with customer Y, this adds a significant time cost to the resolution of the support ticket. In another example, the aggregator 150 may determine that whenever a support ticket mentions product X in use on computer type S, this subtracts a significant time cost from the resolution of the support ticket. The aggregator 150 may use any appropriate aggregation technique to perform the aggregation and may perform the aggregation at any appropriate interval or on an on-demand basis e.g., when instructed to do so by the customer support team. For example, for each word among the set of explanations (if the explanations are in a word-cost format), the aggregator 150 may average the associated cost regarding the desired statistical parameter across each explanation where the word occurs. In some embodiments, where the explanations generated by the XAI algorithm 140 are based on resolution statistics comprising predicted values for multiple statistical parameters, the aggregator 150 may normalize all of the explanations before performing aggregation using any appropriate normalization technique.

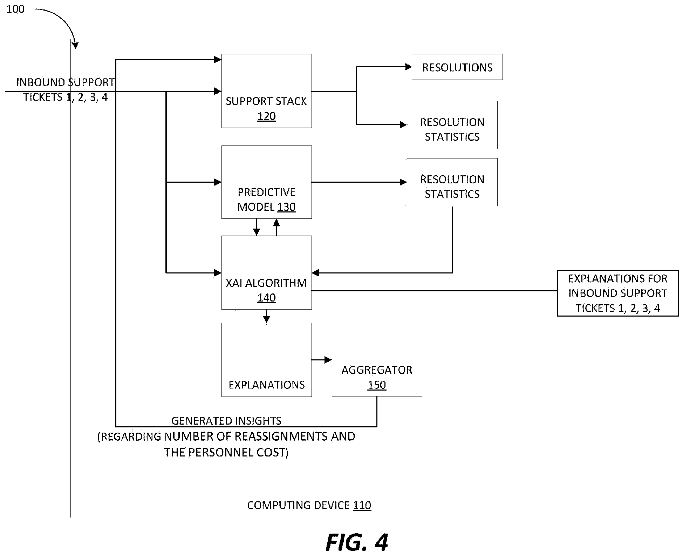

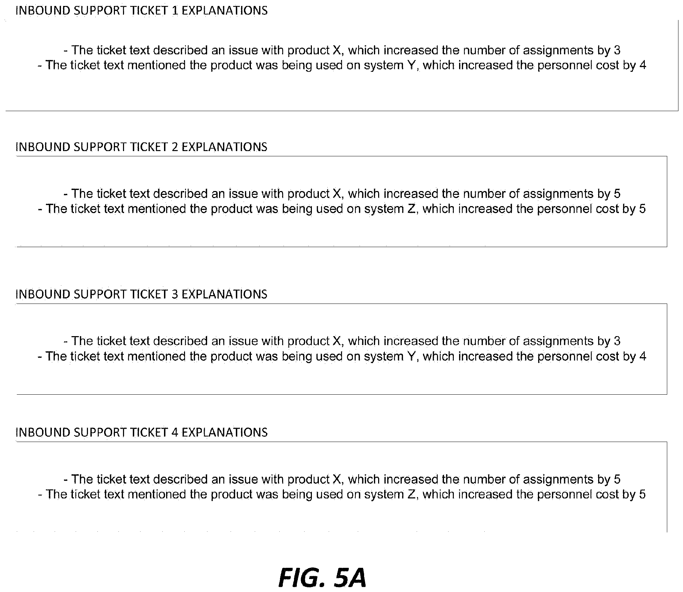

FIG. 4 illustrates an example scenario where the customer support team wishes to gain insight regarding the causes of an increased number of reassignments and increased personnel cost required to resolve support tickets. The customer support team may select number of reassignments and personnel cost as the desired statistical parameters and the prediction model 130 may be trained (using the previously resolved tickets database 117) to predict the number of reassignments and the personnel cost (i.e., the desired statistical parameters) of support tickets required to resolve a given inbound support ticket. Subsequently, for each of the inbound support tickets 1-4, the prediction model 130 may generate resolution statistics that include the number of reassignments and the personnel cost of the inbound support ticket. The XAI algorithm 140 may utilize the inbound support ticket and corresponding resolution statistics output by the prediction model 130 to generate explanation(s) (as discussed in further detail hereinabove) of how and why the prediction model 130 arrived at its predicted resolution statistics. This process may be repeated for each inbound support ticket 1-4 resulting in a set of explanations for each inbound support ticket 1-4 as shown in FIG. 5A. The insight generation module 119 may store the set of explanations for each inbound support ticket 1-4 in the support ticket explanation database 118.

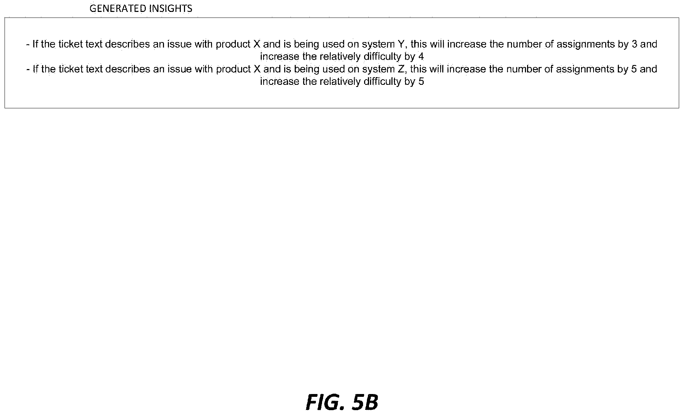

The aggregator 150 may aggregate the set of explanations for each inbound support ticket 1-4 and generate a set of insights regarding the number of reassignments and the personnel cost of support tickets (i.e., the desired statistical parameters). More specifically, upon aggregating the set of explanations for each inbound support ticket 1-4, the aggregator 150 may generate a set of insights as shown in FIG. 5B. In the example of FIG. 5B, upon aggregating the set of explanations for each inbound support ticket 1-4, the aggregator 150 may determine that if a support ticket describes an issue with product X, and is being used on system Y, this will increase the number of assignments by 3 and increase the personnel cost by 4. In addition, the aggregator 150 may determine that if a support ticket describes an issue with product X, and is being used on system Z, this will increase the number of assignments by 5 and increase the personnel cost by 5. These insights may be provided to the support stack 120 where appropriate investments in resources and training may be made based on such insights.

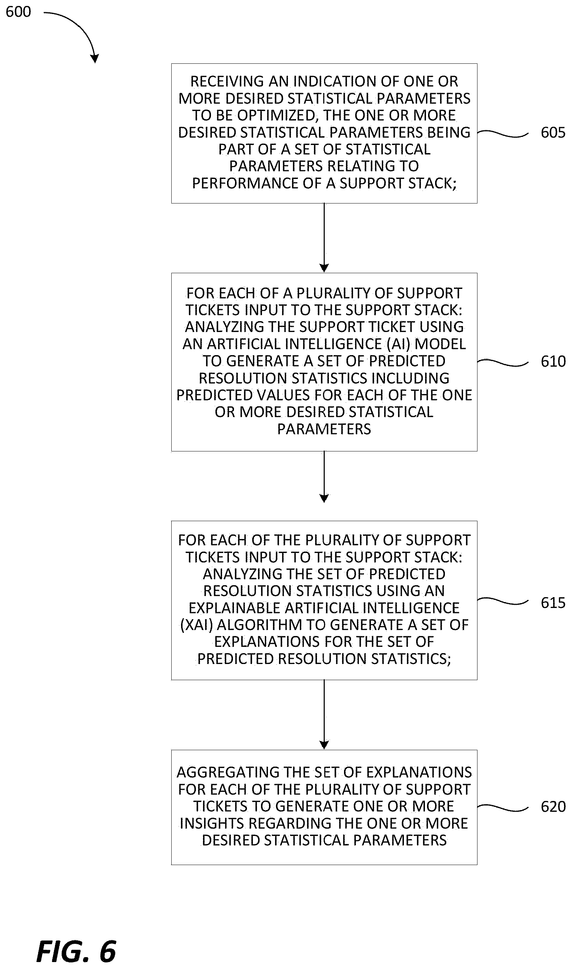

FIG. 6 is a flow diagram of a method 600 of generating insights related to a ticket-based customer support system by aggregating explanations of predicted resolution statistics, in accordance with some embodiments of the present disclosure. Method 600 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 600 may be performed by a computing device (e.g., computing device 110 executing the insight generation module 119 as illustrated in FIG. 2).

Referring also to FIG. 2, in accordance with embodiments of the present disclosure, a customer support team may wish to gain insights regarding specific statistical parameters to optimize the functionality of the support stack 120. For example, the customer support team may wish to determine ways to improve the time required for resolution of support tickets and may want to understand what factors cause the time required to resolve support tickets to increase. In some embodiments, the insight generation module 119 may provide a user interface (not shown) via which a member of the customer support team may select desired statistical parameters from a set of available statistical parameters. Thus, the customer support team may select certain desired statistical parameters that the prediction model 130 should predict values for and the prediction model 130 may be trained to predict values for the selected statistical parameters (e.g., time required for resolution) given an input support ticket. The customer support team may select any number/combination of statistical parameters for the prediction model 130 to output predicted values for.

At block 605, the insight generation module 119 may receive the selected statistical parameters. The prediction model 130 may be trained to predict values for the selected statistical parameters (e.g., time required for resolution) given an input support ticket. The prediction model 130 may be trained using a previously-resolved tickets database 117 (i.e., a database of previously-resolved tickets) which may comprise a large number of previously-resolved tickets and their corresponding resolution statistics. At block 610, for each support ticket that is input to the support stack 120, the prediction model 130 may generate a set of predicted resolution statistics including values for each of the selected statistical parameters.

The XAI algorithm 140 may be an AI model trained to analyze a support ticket and corresponding resolution statistics output by the prediction model 130 and provide an explanation(s) of how and why the prediction model 130 arrived at its predicted resolution statistics. The XAI algorithm 140 may implement saliency techniques such as LIME or SHAP that generate a quantitative breakdown of how components within an input to the prediction model 130 (i.e., the support ticket) affect the output of the prediction model 130. At block 615, for each support ticket that is input to the support stack 120, the XAI algorithm 140 may analyze the support ticket and corresponding resolution statistics output by the prediction model 130, and generate a set of explanations as to how and why the prediction model 130 arrived at its predicted resolution statistics. FIG. 3 illustrates example explanations provided by a typical saliency technique after analyzing resolution statistics generated by the prediction model 130. More specifically, FIG. 3 illustrates example explanations of predictions made by the prediction model 130 regarding the time required for resolution of an inbound support ticket (an example desired statistical parameter). FIG. 3 illustrates the example explanations in a phrase-cost format, however this is not a limitation and the XAI algorithm 140 can be tuned to provide explanations in any appropriate format as desired by the customer support team (as discussed in further detail hereinabove).

Over time, as the explanations provided by the XAI algorithm 140 for the predicted resolution statistics of various subsequent inbound support tickets are collected, at block 620 the aggregator 150 may aggregate the explanations for each of inbound support ticket stored in the database 118 in view of the desired statistical parameters. The total sum of the explanations generated by the XAI model 140 for each of the inbound support tickets stored in the database 118 may provide comprehensive insights into the statistical parameters being predicted by the prediction model 130. For example, after aggregation, the aggregator 150 may determine that whenever an inbound support ticket mentions product X in usage with customer Y, this adds a significant time cost to the resolution of the support ticket. In another example, the aggregator 150 may determine that whenever a support ticket mentions product X in use on computer type S, this subtracts a significant time cost from the resolution of the support ticket. The aggregator 150 may use any appropriate aggregation technique to perform the aggregation and may perform the aggregation at any appropriate interval or on an on-demand basis e.g., when instructed to do so by the customer support team. In some embodiments, where the explanations generated by the XAI algorithm 140 are based on resolution statistics comprising predicted values for multiple statistical parameters, the aggregator 150 may normalize all of the explanations before performing aggregation using any appropriate normalization technique.

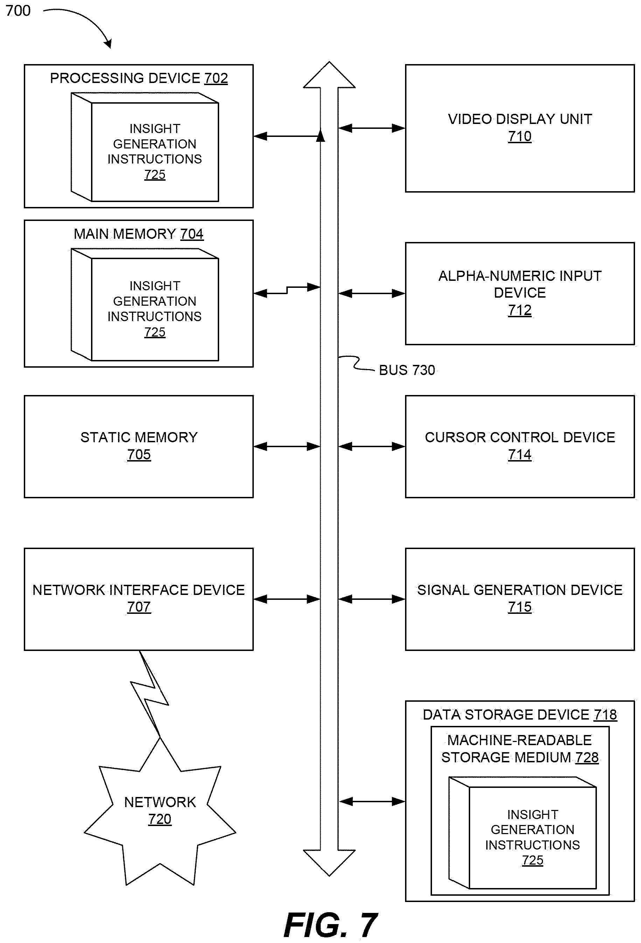

FIG. 7 illustrates a diagrammatic representation of a machine in the example form of a computer system 700 within which a set of instructions, for causing the machine to perform any one or more of the methodologies discussed herein for generating insights related to a ticket-based customer support system by aggregating explanations of predicted resolution statistics.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computer system 700 may be representative of a server.

The exemplary computer system 700 includes a processing device 702, a main memory 704 (e.g., read-only memory (ROM), flash memory, dynamic random access memory (DRAM)), a static memory 705 (e.g., flash memory, static random access memory (SRAM), etc.), and a data storage device 718, which communicate with each other via a bus 730. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 700 may further include a network interface device 707 which may communicate with a network 720. The computing device 700 also may include a video display unit 710 (*e.g.,* a liquid crystal display (LCD) or a cathode ray tube (CRT)), an alphanumeric input device 712 (*e.g.,* a keyboard), a cursor control device 714 (*e.g.,* a mouse) and an acoustic signal generation device 715 (*e.g.,* a speaker). In one embodiment, video display unit 710, alphanumeric input device 712, and cursor control device 714 may be combined into a single component or device (*e.g.,* an LCD touch screen).

Processing device 702 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. The processing device 702 is configured to execute insight generation instructions 725, for performing the operations and steps discussed herein.

The data storage device 718 may include a machine-readable storage medium 728, on which is stored one or more sets of insight generation instructions 725 (e.g., software) embodying any one or more of the methodologies of functions described herein. The insight generation instructions 725 may also reside, completely or at least partially, within the main memory 704 or within the processing device 702 during execution thereof by the computer system 700; the main memory 704 and the processing device 702 also constituting machine-readable storage media. The insight generation instructions 725 may further be transmitted or received over a network 720 via the network interface device 707.

The machine-readable storage medium 728 may also be used to store instructions to perform a method for generating insights related to a ticket-based customer support system by aggregating explanations of predicted resolution statistics. While the machine-readable storage medium 728 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "receiving," "routing," "updating," "providing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified falling within the scope of the appended claims.

## Claims

1. A method comprising:
receiving an indication of one or more desired statistical parameters to be optimized, the one or more desired statistical parameters being part of a set of statistical parameters relating to performance of a support stack;
for each of a plurality of support tickets input to the support stack:
analyzing the support ticket using an artificial intelligence, AI, model to generate a set of predicted resolution statistics including predicted values for each of the one or more desired statistical parameters, and
analyzing the set of predicted resolution statistics using an explainable artificial intelligence, XAI, algorithm to generate a set of explanations for the set of predicted resolution statistics; and
aggregating the set of explanations for each of the plurality of support tickets to generate one or more insights regarding the one or more desired statistical parameters;
wherein each explanation in the set of explanations comprises:
a plurality of different words that the support ticket is comprised of; and
for each of the plurality of different words, an associated cost regarding a desired statistical parameter of the one or more desired statistical parameters;
wherein aggregating the set of explanations comprises:
for each word among the set of explanations, averaging the associated cost regarding the desired statistical parameter across each explanation where the word occurs.

2. The method of claim 1, further comprising:
training the AI model to predict values for each of the one or more desired statistical parameters based on data in a support ticket.

3. The method of claim 1, wherein the AI model is trained using a database of previously resolved support tickets and corresponding resolution statistics.

4. The method of claim 1, wherein the set of statistical parameters comprises:
an amount of time required to resolve a support ticket, a number of reassignments required to resolve the support ticket, a personnel cost required to resolve the support ticket, and an indication of whether any terms of a service level agreement, SLA, were breached.

5. The method of claim 1, wherein generating the set of explanations for the set of predicted resolution statistics of a support ticket comprises:
generating a set of synthetic support tickets, each of the set of synthetic support tickets comprising a permutation of the support ticket;
querying the AI model with each of the set of synthetic support tickets; and
generating the set of explanations for the set of predicted resolution statistics of the support ticket based predicted resolution statistics generated by the AI model for each of the set of synthetic support tickets and the set of predicted resolution statistics.

6. A system comprising:
a memory; and
a processing device operatively coupled to the memory, the processing device to:
receive an indication of one or more desired statistical parameters to be optimized, the one or more desired statistical parameters being part of a set of statistical parameters relating to performance of a support stack;
train an AI model to predict values for each of the one or more desired statistical parameters based on data in a support ticket;
for each of a plurality of support tickets input to the support stack:
analyze the support ticket using the artificial intelligence, AI, model to generate a set of predicted resolution statistics including predicted values for each of the one or more desired statistical parameters; and
analyze the set of predicted resolution statistics using an explainable artificial intelligence, XAI, algorithm to generate a set of explanations for the set of predicted resolution statistics; and
aggregate the set of explanations for each of the plurality of support tickets to generate one or more insights regarding the one or more desired statistical parameters;
wherein each explanation in the set of explanations comprises:
a plurality of different words that the support ticket is comprised of; and
for each of the plurality of different words, an associated cost regarding a desired statistical parameter of the one or more desired statistical parameters;
wherein to aggregate the set of explanations, the processing device is to:
for each word among the set of explanations, average the associated cost regarding the desired statistical parameter across each explanation where the word occurs.

7. The system of claim 6, wherein the AI model comprises a neural network.

8. The system of claim 6, wherein the AI model is trained using a database of previously resolved support tickets and corresponding resolution statistics.

9. The system of claim 6, wherein the set of statistical parameters comprises:
an amount of time required to resolve a support ticket, a number of reassignments required to resolve the support ticket, a personnel cost required to resolve the support ticket, and an indication of whether any terms of a service level agreement, SLA, were breached.

10. The system of claim 6, wherein to generate the set of explanations for the set of predicted resolution statistics of a support ticket, the processing device is to:
generate a set of synthetic support tickets, each of the set of synthetic support tickets comprising a permutation of the support ticket;
query the AI model with each of the set of synthetic support tickets; and
generate the set of explanations for the set of predicted resolution statistics of the support ticket based predicted resolution statistics generated by the AI model for each of the set of synthetic support tickets and the set of predicted resolution statistics.

11. A non-transitory computer-readable medium having instructions stored thereon which, when executed by a processing device cause the processing device to perform operations comprising the method of any of claims 1 to 5.

## Patentansprüche

1. Ein Verfahren, das Folgendes beinhaltet:
Empfangen einer Angabe eines oder mehrerer gewünschter zu optimierender statistischer Parameter, wobei der eine oder die mehreren gewünschten statistischen Parameter Teil eines Satzes von statistischen Parametern sind, die sich auf die Leistung eines Support-Stacks beziehen;
für jedes einer Vielzahl von Support-Tickets, die in den Support-Stack eingegeben werden:
Analysieren des Support-Tickets unter Verwendung eines Modells künstlicher Intelligenz, AI, um einen Satz von Statistiken vorhergesagter Auflösung zu erzeugen, umfassend vorhergesagte Werte für jeden des einen oder der mehreren gewünschten statistischen Parameter, und
Analysieren des Satzes von Statistiken vorhergesagter Auflösung unter Verwendung eines Algorithmus erklärbarer künstlicher Intelligenz, XAI, um einen Satz von Erklärungen für den Satz von Statistiken vorhergesagter Auflösung zu erzeugen; und
Aggregieren des Satzes von Erklärungen für jedes der Vielzahl von Support-Tickets, um eine oder mehrere Erkenntnisse bezüglich des einen oder der mehreren gewünschten statistischen Parameter zu erzeugen;
wobei jede Erklärung in dem Satz von Erklärungen Folgendes beinhaltet:
eine Vielzahl von unterschiedlichen Wörtern, aus denen das Support-Ticket besteht; und
für jedes der Vielzahl von unterschiedlichen Wörtern, assoziierte Kosten bezüglich eines gewünschten statistischen Parameters des einen oder der mehreren gewünschten statistischen Parameter;
wobei Aggregieren des Satzes von Erklärungen Folgendes beinhaltet:
für jedes Wort aus dem Satz von Erklärungen, Mitteln der assoziierten Kosten bezüglich des gewünschten statistischen Parameters über jede Erklärung, wo das Wort auftritt.

2. Verfahren gemäß Anspruch 1, das ferner Folgendes beinhaltet:
Trainieren des Al-Modells, um Werte für jeden des einen oder der mehreren gewünschten statistischen Parameter basierend auf Daten in einem Support-Ticket vorherzusagen.

3. Verfahren gemäß Anspruch 1, wobei das AI-Modell unter Verwendung einer Datenbank von zuvor aufgelösten Support-Tickets und entsprechenden Auflösungsstatistiken trainiert wird.

4. Verfahren gemäß Anspruch 1, wobei der Satz von statistischen Parametern Folgendes beinhaltet:
eine Zeitdauer, die erforderlich ist, um ein Support-Ticket aufzulösen, eine Anzahl von Neuzuweisungen, die erforderlich sind, um das Support-Ticket aufzulösen, Personalkosten, die erforderlich sind, um das Support-Ticket aufzulösen, und eine Angabe, ob irgendwelche Bedingungen einer Dienstgütevereinbarung, SLA, verletzt wurden.

5. Verfahren gemäß Anspruch 1, wobei Erzeugen des Satzes von Erklärungen für den Satz von Statistiken vorhergesagter Auflösung eines Support-Tickets Folgendes beinhaltet:
Erzeugen eines Satzes von synthetischen Support-Tickets, wobei jedes des Satzes von synthetischen Support-Tickets eine Permutation des Support-Tickets beinhaltet;
Abfragen des AI-Modells mit jedem des Satzes von synthetischen Support-Tickets; und
Erzeugen des Satzes von Erklärungen für den Satz von Statistiken vorhergesagter Auflösung des Support-Tickets basierend auf Statistiken vorhergesagter Auflösung, die durch das AI-Modell für jedes des Satzes von synthetischen Support-Tickets und des Satzes von Statistiken vorhergesagter Auflösung erzeugt werden.

6. Ein System, das Folgendes beinhaltet:
einen Speicher; und
eine Verarbeitungsvorrichtung, die operativ mit dem Speicher gekoppelt ist, wobei die Verarbeitungsvorrichtung zu Folgendem dient:
Empfangen einer Angabe eines oder mehrerer gewünschter zu optimierender statistischer Parameter, wobei der eine oder die mehreren gewünschten statistischen Parameter Teil eines Satzes von statistischen Parametern sind, die sich auf die Leistung eines Support-Stacks beziehen;
Trainieren eines Al-Modells, um Werte für jeden des einen oder der mehreren gewünschten statistischen Parameter basierend auf Daten in einem Support-Ticket vorherzusagen;
für jedes einer Vielzahl von Support-Tickets, die in den Support-Stack eingegeben werden:
Analysieren des Support-Tickets unter Verwendung des Modells künstlicher Intelligenz, AI, um einen Satz von Statistiken vorhergesagter Auflösung zu erzeugen, umfassend vorhergesagte Werte für jeden des einen oder der mehreren gewünschten statistischen Parameter; und
Analysieren des Satzes von Statistiken vorhergesagter Auflösung unter Verwendung eines Algorithmus erklärbarer künstlicher Intelligenz, XAI, um einen Satz von Erklärungen für den Satz von Statistiken vorhergesagter Auflösung zu erzeugen; und
Aggregieren des Satzes von Erklärungen für jedes der Vielzahl von Support-Tickets, um eine oder mehrere Erkenntnisse bezüglich des einen oder der mehreren gewünschten statistischen Parameter zu erzeugen;
wobei jede Erklärung in dem Satz von Erklärungen Folgendes beinhaltet:
eine Vielzahl von unterschiedlichen Wörtern, aus denen das Support-Ticket besteht; und
für jedes der Vielzahl von unterschiedlichen Wörtern, assoziierte Kosten bezüglich eines gewünschten statistischen Parameters des einen oder der mehreren gewünschten statistischen Parameter;
wobei zum Aggregieren des Satzes von Erklärungen die Verarbeitungsvorrichtung zu Folgendem dient:
für jedes Wort aus dem Satz von Erklärungen, Mitteln der assoziierten Kosten bezüglich des gewünschten statistischen Parameters über jede Erklärung, wo das Wort auftritt.

7. System gemäß Anspruch 6, wobei das AI-Modell ein neuronales Netzwerk beinhaltet.

8. System gemäß Anspruch 6, wobei das AI-Modell unter Verwendung einer Datenbank von zuvor aufgelösten Support-Tickets und entsprechenden Auflösungsstatistiken trainiert wird.

9. System gemäß Anspruch 6, wobei der Satz von statistischen Parametern Folgendes beinhaltet:
eine Zeitdauer, die erforderlich ist, um ein Support-Ticket aufzulösen, eine Anzahl von Neuzuweisungen, die erforderlich sind, um das Support-Ticket aufzulösen, Personalkosten, die erforderlich sind, um das Support-Ticket aufzulösen, und eine Angabe, ob irgendwelche Bedingungen einer Dienstgütevereinbarung, SLA, verletzt wurden.

10. System gemäß Anspruch 6, wobei zum Erzeugen des Satzes von Erklärungen für den Satz von Statistiken vorhergesagter Auflösung eines Support-Tickets die Verarbeitungsvorrichtung zu Folgendem dient:
Erzeugen eines Satzes von synthetischen Support-Tickets, wobei jedes des Satzes von synthetischen Support-Tickets eine Permutation des Support-Tickets beinhaltet;
Abfragen des AI-Modells mit jedem des Satzes von synthetischen Support-Tickets; und
Erzeugen des Satzes von Erklärungen für den Satz von Statistiken vorhergesagter Auflösung des Support-Tickets basierend auf Statistiken vorhergesagter Auflösung, die durch das AI-Modell für jedes des Satzes von synthetischen Support-Tickets und des Satzes von Statistiken vorhergesagter Auflösung erzeugt werden.

11. Ein nicht transitorisches computerlesbares Medium mit darauf gespeicherten Anweisungen, die bei Ausführung durch eine Verarbeitungsvorrichtung bewirken, dass die Verarbeitungsvorrichtung Operationen durchführt, die das Verfahren gemäß einem der Ansprüche 1 bis 5 beinhalten.

## Revendications

1. Un procédé comprenant :
la réception d'une indication d'un ou de plusieurs paramètres statistiques souhaités à optimiser, les un ou plusieurs paramètres statistiques souhaités faisant partie d'un ensemble de paramètres statistiques relatifs à la performance d'une pile de support ;
pour chaque ticket d'une pluralité de tickets de support fournis en entrée à la pile de support :
l'analyse du ticket de support à l'aide d'un modèle d'intelligence artificielle, IA, pour générer un ensemble de statistiques de résolution prédites incluant des valeurs prédites pour chacun des un ou plusieurs paramètres statistiques souhaités, et
l'analyse de l'ensemble de statistiques de résolution prédites à l'aide d'un algorithme d'intelligence artificielle explicable (XAI, *explainable artificial intelligence*) pour générer un ensemble d'explications pour l'ensemble de statistiques de résolution prédites ; et
l'agrégation de l'ensemble d'explications pour chaque ticket de la pluralité de tickets de support pour générer une ou plusieurs connaissances concernant les un ou plusieurs paramètres statistiques souhaités ;
dans lequel chaque explication dans l'ensemble d'explications comprend :
une pluralité de mots différents dont le ticket de support est composé ; et
pour chaque mot de la pluralité de mots différents, un coût associé concernant un paramètre statistique souhaité des un ou plusieurs paramètres statistiques souhaités ;
dans lequel l'agrégation de l'ensemble d'explications comprend :
pour chaque mot parmi l'ensemble d'explications, le calcul de la moyenne du coût associé concernant le paramètre statistique souhaité dans chaque explication où le mot se présente.

2. Le procédé de la revendication 1, comprenant en outre :
l'entraînement du modèle d'IA pour prédire des valeurs pour chacun des un ou plusieurs paramètres statistiques souhaités sur la base de données dans un ticket de support.

3. Le procédé de la revendication 1, dans lequel le modèle d'IA est entraîné à l'aide d'une base de données de tickets de support précédemment résolus et de statistiques de résolution correspondantes.

4. Le procédé de la revendication 1, dans lequel l'ensemble de paramètres statistiques comprend :
une quantité de temps requise pour résoudre un ticket de support, un nombre de réaffectations requises pour résoudre le ticket de support, un coût de personnel requis pour résoudre le ticket de support, et une indication de si des conditions quelconques d'un accord de niveau de service, SLA, n'ont pas été respectées.

5. Le procédé de la revendication 1, dans lequel la génération de l'ensemble d'explications pour l'ensemble de statistiques de résolution prédites d'un ticket de support comprend :
la génération d'un ensemble de tickets de support synthétiques, chaque ticket de l'ensemble de tickets de support synthétiques comprenant une permutation du ticket de support ;
l'interrogation du modèle d'IA avec chaque ticket de l'ensemble de tickets de support synthétiques ; et
la génération de l'ensemble d'explications pour l'ensemble de statistiques de résolution prédites des statistiques de résolution prédites basées sur ticket de support générées par le modèle d'IA pour chacun de l'ensemble de tickets de support synthétiques et de l'ensemble de statistiques de résolution prédites.

6. Un système comprenant :
une mémoire ; et
un dispositif de traitement couplé de manière opérationnelle à la mémoire, le dispositif de traitement étant destiné :
à recevoir une indication d'un ou de plusieurs paramètres statistiques souhaités à optimiser, les un ou plusieurs paramètres statistiques souhaités faisant partie d'un ensemble de paramètres statistiques relatifs à la performance d'une pile de support ;
à entraîner un modèle d'IA pour prédire des valeurs pour chacun des un ou plusieurs paramètres statistiques souhaités sur la base de données dans un ticket de support ;
pour chaque ticket d'une pluralité de tickets de support fournis en entrée à la pile de support :
à analyser le ticket de support à l'aide du modèle d'intelligence artificielle, IA, pour générer un ensemble de statistiques de résolution prédites incluant des valeurs prédites pour chacun des un ou plusieurs paramètres statistiques souhaités ; et
à analyser l'ensemble de statistiques de résolution prédites à l'aide d'un algorithme d'intelligence artificielle explicable (XAI, *explainable artificial intelligence*) pour générer un ensemble d'explications pour l'ensemble de statistiques de résolution prédites ; et
à agréger l'ensemble d'explications pour chaque ticket de la pluralité de tickets de support pour générer une ou plusieurs connaissances concernant les un ou plusieurs paramètres statistiques souhaités ;
dans lequel chaque explication dans l'ensemble d'explications comprend :
une pluralité de mots différents dont le ticket de support est composé ; et
pour chaque mot de la pluralité de mots différents, un coût associé concernant un paramètre statistique souhaité des un ou plusieurs paramètres statistiques souhaités ;
dans lequel pour agréger l'ensemble d'explications, le dispositif de traitement est destiné :
pour chaque mot parmi l'ensemble d'explications, à calculer la moyenne du coût associé concernant le paramètre statistique souhaité dans chaque explication où le mot se présente.

7. Le système de la revendication 6, dans lequel le modèle d'IA comprend un réseau neuronal.

8. Le système de la revendication 6, dans lequel le modèle d'IA est entraîné à l'aide d'une base de données de tickets de support précédemment résolus et de statistiques de résolution correspondantes.

9. Le système de la revendication 6, dans lequel l'ensemble de paramètres statistiques comprend :
une quantité de temps requise pour résoudre un ticket de support, un nombre de réaffectations requises pour résoudre le ticket de support, un coût de personnel requis pour résoudre le ticket de support, et une indication de si des conditions quelconques d'un accord de niveau de service, SLA, n'ont pas été respectées.

10. Le système de la revendication 6, dans lequel pour générer l'ensemble d'explications pour l'ensemble de statistiques de résolution prédites d'un ticket de support, le dispositif de traitement est destiné :
à générer un ensemble de tickets de support synthétiques, chaque ticket de l'ensemble de tickets de support synthétiques comprenant une permutation du ticket de support ;
à interroger le modèle d'IA avec chaque ticket de l'ensemble de tickets de support synthétiques ; et
à générer l'ensemble d'explications pour l'ensemble de statistiques de résolution prédites des statistiques de résolution prédites basées sur ticket de support générées par le modèle d'IA pour chacun de l'ensemble de tickets de support synthétiques et de l'ensemble de statistiques de résolution prédites.

11. Un support lisible par ordinateur non transitoire sur lequel sont stockées des instructions qui, lorsqu'elles sont exécutées par un dispositif de traitement, amènent le dispositif de traitement à effectuer des opérations comprenant le procédé de n'importe lesquelles des revendications 1 à 5.
